# EUROPEAN PATENT SPECIFICATION

(11) **EP 1 541 309 B1**
(45) Date of publication and mention of the grant of the patent: **18.08.2010**
(21) Application number: 03725211.1
(22) Date of filing: 16.05.2003
(51) Int. Cl.: B28D 1/02

(54) **STONE SAWING WITHOUT ACUTE NOISE**
SÄGEN VON STEINEN OHNE AKUTEN LÄRM
SCIAGE DE PIERRES SANS BRUIT AIGU

(30) Priority: 01.07.2002 ES 200201529
(43) Date of publication of application: 15.06.2005
(73) Proprietor: Castro Gomez, Luis, 36201 Vigo (ES)
(72) Inventor: Castro Gomez, Luis, 36201 Vigo (ES)
(74) Representative: Temino Ceniceros, Ignacio
(86) International application number: PCT/ES2003/000219
(87) International publication number: WO 2004/002703

(56) References cited:
- EP-A- 0 767 035
- EP-A- 1 142 672
- ES-A- 2 004 387
- ES-A- 2 140 353
- ES-A- 8 702 220
- ES-T3- 2 088 478

## Description

### TECHNICAL SECTOR

In general, the objective of the stone-sawing process is to manufacture materials for construction, which is the sector under which this activity qualifies. The raw materials are stone blocks such as granite, siennite, diorite, serpentine, labradorite, gabbro, porfido, etc. measuring between 1 and 12 m3 in parallelepipeds with edges measuring 0.5 to 3.5 m, and after the sawing process, they become slabs measuring 1 or more cm thick, generally 11, 13, 17, 21, 26, 31 and 41 mm, up to 7 m2.

### TECHNICAL BACKGROUND

Patents 200100842/2, PCT9400009, ES9801558, ES99100102, PT101357=IT1261207, P20020010 and others describe the sawing process with fine, soft powder sludges and other improvements. However, it was not possible to apply these techniques under normal sawing conditions, i.e. with sludges containing between 120 and 180 g of grit with a diameter of between 0.4 and 1 mm, to machines with semi-rectilinear strip movement, with a long course, between 700 and 800 mm, and short relative camber, between 25 and 30 mm, although they work very well with machines with a course of 320 mm and 16 mm of camber. Using fine, soft powders in machines with semi-rectilinear movement only allowed 30% progress or a 30% lower power requirement. In both cases, the noise was almost the same as without the fine, soft powders; i.e. that the strips continued to drag and rub directly against the stone.

Nowadays, almost all machines have a course of between 500 and 800mm, with camber or without camber, and move in a straight line, in this case using perforated strips, the holes on which allow the grit to enter the space between the strip and the bottom of the slot. The cost of the sawing process is currently approximately 5.5€ in machines with camber and over 6.6€ in machines without camber, because of the higher cost per kg of the perforated strips, when sawing stone with a sawing difficulty index of 3 (IDA=3).

Some existing machines with semi-rectilinear movement cut with maximum sustained advances of up to 10/IDA cm/h (IDA = Sawing difficulty index, from 1 (the stone easy to saw) to 5 (the stone more difficult to saw), that is used commonly in the stone sawing industry), with strips tensed at 7.000 kp.

Machines with rectilinear movement advance up to 60% more and there are machines with long courses and short cambers that advance from 10% less to 80% more than the aforementioned machines with semi-rectilinear movement.

The noise from the sawing process, as it is carried out nowadays, is due to the strip rubbing straight against the stone. It sounds like "chaa, chaa,...", more than 90db at 1.5m, and is a high-pitched noise. This friction may not occur along the whole length of the strip, or all the time the strip is pressing against the stone. When the strip is not rubbing against the stone, but merely leaning on the grit, which lies between the lower edge of the strip and the bottom of the slot, like a linear ball or roller bearing, the noise sounds like "ruoon, ruoon,...", less than 70 db at 1.5m, and is a low-pitched noise. This low-pitched noise is due to the stone and the grit breaking, when the latter moves under sufficient force for the pressure of the grit on the stone to exceed the stone's resistance to compression and the steel in the grit and thus break the stones.

The low-pitched noise is also present in existing sawing processes, but is not detected by the human ear as it is lower in pitch and strength than the high-pitched noise.

In the case of machines with semi-rectilinear movement, with long courses and short relative cambers, the high-pitched noise indicates that if the grit under the strip is sufficient at the start of the course, it is not enough during the rest of the course, as it escapes at the sides. The losses at the sides cause a detour in the path of half the thickness of the strip, 2mm, or less, and the probability that this should occur is expected to be very high in a pressured course of more than 400mm, given the irregularity of the surfaces at the bottom of the slot and on the lower edge of the strip, measuring 4 mm wide, which has a circular profile of 4mm in diameter. It is also possible that enough grit and sludge does not go under the strip because of the short time available for the sludge to go down, because of the viscosity of the sludge and the limited space available between strips and stones, 1mm or less on each side.

In the case of machines with rectilinear movement and perforated strips, the friction between the strip and the stone is partly due to the grit escaping at the sides and especially due to how difficult it is for the grit to get under the strip, which does not free itself from the bottom of the slot at all.

In both cases, the friction between the strip and the stone is responsible for the wearing of approximately 1kg of the strip per m² of slot with stone of sawing difficulty index of 3. The grit needed for this stone is currently 1.6 kg. In the rolling between the strip and the grit, the grit and strip hardly undergo any wear because the resistance limits of these materials are only exceeded in a small proportion of cases, as the k coefficient in the formula F = kr², (F = force in ponds that a grain of grit with a radius of r cm exerts, to break) is at least 75 times higher in the contact between the grit and the strip than in the contact between the grit and the hardest stone (quartz), due to the different elastic limits of both contacts. The coefficient k is approximately equal to 256,000 for quartz if its resistance to compression is 9,500kp/cm² in a cubic test-tube of average resistance.

The angular grit, in the vertices and edges, has a very small radius and therefore in these cases, F is very small and short or easily marks the stone, but the vertex or the edge also suffers from wear and is rounded, until after successive times, each grain of grit becomes spherical in shape, with a diameter that is shorter than the minimum initial dimension.

### DESCRIPTION OF THE INVENTION

The solution consists of increasing the concentration of the grains of grit in the sludge, so that the probability of their presence is sufficient, after the long course of the strip and they can prevent the strip from rubbing against the stone. This is achieved by increasing the content of grit in the sludge and reducing the average size of the grains, as far as economically possible, until it is possible to carry out the sawing process without the strip rubbing against the stone, i.e. until the intense, high-pitched noise disappears, leaving a soft noise like the drone of the bagpipes.

In machines with rectilinear movement, the grit escaping at the sides is due to the distance between the perforations. However, if the distance were reduced, the cost per kg of strip would be even higher.

The lack of friction due to the presence of a lot of grains of grit under the strip allows for greater advancement.

A grit content double the normal content to date and a grain size of on average half the current size allow for 2 x 4 = 8 times more grains of grit under the strips.

Grit contents that are double the normal used to date and even higher do not cause problems due to friction between the grains, if the viscosity of the sludge is sufficient to keep them in suspension - for example, sludge with a content of 22% of volume of fine, soft powder sludge, no matter what the size of the grit.

With the method described in patent ES200100842, for diluting and homogenizing the sludge before the cyclone stage, it is possible to prevent the loss of 95% and more of the grit with a diameter of between 0.2 and 0.3 mm, which allows using grit measuring between 0.3 and 0.5 mm without increasing the grit consumption.

Therefore, in order to cut the more difficult stones, with IDA 4 and 5 (hard stones, difficult to saw), grit measuring less than 0.5 mm should preferably be used. For other stones, a size lower than 1/√IDA mm may be used, i.e. 0.7 mm for stones with an IDA of 1 and 2 (soft stones, easy to saw), and 0.6 for stones with an IDA = 3.

The maximum size of the grit is understood to be the size defined by the size of the opening in the square mesh the grit passes through, whether spherical or angular.

In the few experiments that have been carried out, the conclusions demonstrate that concentrations of 250 to 400gr of actual grit per liter of sludge are recommendable in some cases. However, given the variety of machines that are used and the great variety of stones that are cut, this parameter must be confirmed by experiment. Because there are no recorded cases of the use of more than 190g of actual grit, and the concentration between the maximum size and 40% of the maximum per liter of sludge are considered to be useful, concentrations of more than 210g/l are claimed.

The smaller size of the grains of grit makes the sawing process easier. In the formula F = kr2, if r is half the normal value, F will be a quarter of the normal value; i.e. a quarter of the force on a grain of grit marks the stone, meaning that the sawing process advances and if the machine can exert a force of, for example, 50,000 F, acting upon 50,000 grains of grit, if the size is reduced by half, it will act on 50.000 x 22 = 200,000 grains of grit, although the progress will not be 4 times greater, but possibly between two and three times greater, merely by reducing the average diameter or size of the grit. Experiments carried out on machines with short courses have confirmed this.

The lack of friction between the strips and the slot is also advantageous in terms of energy savings. Approximately 5 kWh/m² are currently used in sawing stone with a difficulty level of 3. Around 25 kWh/m² were used over 25 years ago. However, the energy needed to make a 6 mm slot on stone with a difficulty level of 3 is approximately 0.035 kWh/m², creating debris with an average size of 37 µm, normally, and losses in the machine are lower than 1 kWh/m². The rest, i.e. approximately 4 kWh/m², is used in other friction, 1.5 kWh/m² approximately in the friction with the debris from the sawing process (30% of 5) and approximately 2.5 kWh/m² in the friction between the strip and the bottom of the slot. These 2.5 kWh/m² may be saved by using grit in greater quantity and of a finer consistency.

On the other hand, the energy savings prevent the sludge from heating up and therefore, prevent water from evaporating and the resulting spreading of fine powder which is so harmful to workers and machines alike.

### List of advantages:

No annoying high-pitched noise, over 80 dB at 1.5m.

Savings in strips, as they do not rub against the stone, almost 1 kg/m² on stone with a difficulty level of 3 or 0.3 IDA kg/m², approximately.

Energy savings of more than 2.4 kWh/m2 in the case of stone with a difficulty level of 3, or of 0.8 x IDA kg/m², approximately.

Increased progress and greater production, double or higher.

Less dust, which deteriorates machines.

Workers do not need masks to avoid silicosis and neither do they need protection for their ears.

It is possible to stand and talk in the vicinity of the machines.

Machines do not bother neighbouring activities / enterprises.

### BEST WAY TO CARRY OUT PROCEDURE

Purchase grit of the size that is best suited to the IDA difficulty level of each stone or classify it by filtering if purchased up to 1 mm thick.

Maintain the grit concentration in sludge that is most suited to each type of stone and machine, higher than 210 g/l and possibly up to 650 g/l and higher.

Use the method described in patent ES200100842 to dilute and homogenise the sludges in order to retrieve the grit before disposing of the sludges.

Work out in experiments, for each type of machine, each kind, condition and tension of the strips and for each stone type and size, the most convenient actual grit concentrations, the most convenient grit sizes and the most convenient maximum progress, in order to eliminate high-pitched noise over 80 db at 1.5 m and achieve the other advantages described herein.

### How to exploit the invention:

As there are about 1,500 sawing machines in operation worldwide, the best way is to establish license contracts for use of the invention, with a share in the savings generated, starting off with an equal share the 1 st year and decreasing shares each year that goes by, ending with a 25% share the sixth and successive years, until the patent expires.

## Claims

1. Stone-sawing method for sawing without any high-pitched noise with a sound level lower than 80db at 1.5m and low in pitch wherein said stone-sawing method is implemented into a stone sawing machine using sludge **characterized in that** it comprises the use of grit with a maximum size of 700µm for stones with a sawing difficulty index of 1 and 2, 600µm for with a sawing difficulty index of 3 and 500 µm for with a sawing difficulty index of 4 and 5; being the concentration of the grit in the sludge that enters into the stone sawing machine higher than 210g per liter, of a size between the maximum and 40% of the maximum of the size of said grit.

## Patentansprüche

1. Steinsägemethode zum Sägen ohne hohes klirrendes Geräusch, mit einem Geräuschpegel unter 80 db in 1,5 m und niedriger Tonlage, wobei diese Methode in eine Steinsägemaschine implementiert wird, die Schlamm verwendet, die sich **dadurch kennzeichnet, dass** sie die Verwendung von Schotter mit einer Größe von höchstens 700 µm für Steine mit einem Sägeschwierigkeitsindex von 1 und 2 umfasst, 600 µm für Steine mit einem Sägeschwierigkeitsindex 3 und 500 µm für Steine mit einem Sägeschwierigkeitsindex von 4 und 5, wobei die Konzentration des Schotters im Schlamm, der in die Steinsägemaschine kommt, höher als 210 g pro Liter ist und im Größenbereich zwischen dem Maximum und 40 % der Höchstgröße des besagten Schotters liegt.

## Revendications

1. Méthode de sciage de la pierre pour scier sans aucun bruit aigu, avec un niveau sonore inférieur à 80 db à 1,5 m et un bruit grave quand la dite méthode de sciage de pierre est implémentée dans une machine à scier la pierre en utilisant des boues, **caractérisée par le fait qu'**elle comprend l'emploi d'un grain d'une dimension maximum de 700 µm pour les pierres ayant un degré de difficulté de sciage de 1 et de 2, de 600 µm pour les pierres ayant un degré de difficulté de sciage de 3 et de 500 µm pour les pierres ayant un degré de difficulté de sciage de 4 et de 5, la concentration du grain dans les boues qui pénètrent dans la machine à scier la pierre étant de plus de 210 g par litre, de dimensions comprises entre le maximum et 40 % du maximum des dimensions du dit grain.
